(19) Europäisches Patentamt
European Patent Office
Office européen des brevets

(11) **EP 4 443 964 A1**

(12) **EUROPEAN PATENT APPLICATION**

(43) Date of publication:
**09.10.2024 Bulletin 2024/41**

(21) Application number: **24161774.5**

(22) Date of filing: **06.03.2024**

(51) International Patent Classification (IPC):
*H04W 36/00* (2009.01)    *H04W 36/08* (2009.01)

(52) Cooperative Patent Classification (CPC):
**H04W 36/0055;** H04W 36/0085; H04W 36/087

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023 IN 202341026096**

(71) Applicant: **Nokia Technologies Oy
02610 Espoo (FI)**

(72) Inventors:
• **MAJUMDAR, Chitradeep
Bangalore (IN)**

• **KARABULUT, Umur
Munich (DE)**
• **SPAPIS, Panagiotis
Munich (DE)**
• **STANCZAK, Jedrzej
Wroclaw (PL)**
• **ARJONA, Andres
Tokyo (JP)**

(74) Representative: **Nokia EPO representatives
Nokia Technologies Oy
Karakaari 7
02610 Espoo (FI)**

(54) **PRIORISATION IN LOWER LAYER TRIGGERED MOBILITY IN A WIRELESS COMMUNICATION NETWORK**

(57)    A wireless communication network that supports lower layer triggered mobility and is configured so that in cell handovers, synchronised cells where a timing advance has already been acquired are prioritised as target cells for the handover over non-synchronised cells. Among the synchronised cells further priorisation is performed based on signal measurements using an offset.

FIG. 5

**Description**

TECHNOLOGICAL FIELD

Various example embodiments relate to wireless communication systems, and more particularly, to facilitating mobility within such wireless communication systems.

BACKGROUND

As user equipment (UE) moves through a wireless communication system, it may move through cells that comprise regions of radio coverage that are supported by one or more network access node. Maintaining an ability for a UE to communicate effectively with the wireless communication system as it moves through regions of radio coverage is typically referred to as mobility. Layer 1 or layer 2, sometimes termed lower layer, triggered mobility is being increasingly considered to reduce the latency, overhead and interruption time associated with a UE moving between the different cells.

BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various embodiments of the invention.

According to various, but not necessarily all, example embodiments of the invention there is provided a network node that supports at least one of the distributed unit, DU, functionality or a layer 2 protocol of a radio access network, and which supports a first cell, comprising: at least one processor; and at least one memory storing instruction which, when executed by the at least one processor, cause the network node at least to: establish a connection with a user equipment apparatus (UE) via the first cell; determine at least one candidate cell with which the UE may connect; determine whether said at least one candidate cell is a synchronised cell where timing advance (TA) information for a potential connection between the UE and the candidate cell is available or a non-synchronised cell where no timing advance information is available; receive signal strength measurements for potential candidate cells; determine at least one offset to be applied in order to prioritise said synchronised cells over said non-synchronised cells; determine whether said UE is to connect to one of said at least one candidate cells based on said received measurements and said at least one offset.

It was recognised that when performing LTM, where a UE may have performed early timing advance (TA) with some cells, which cells are termed synchronised or sync cells then preferentially selecting one of these cells for a handover may be advantageous and may reduce latency. However, a preferred cell is not just one that is synchronised, signal strength is still an important factor in determining a preferred cell. The present invention seeks a way of prioritising synchronised cells over non-synchronised cells, such that where all other factors are equal a sync cell will be selected. An offset is used and when applied provides a quantitative prioritisation of the sync cells, which prioritisation can be controlled by controlling the value of the offset.

In some example embodiments, said signal strength measurements comprise a layer 1 reference signal to reference power RSRP measurement.

In some example embodiments, said network node is caused to: receive signal strength measurements of said first cell; and determine whether said UE is to connect to one of said at least one candidate cells by performing at least one comparison of signal strength measurements, said at least one comparison comprising at least one of: a comparison of signal strength measurements of candidate cells; and a comparison of an indication of signal strength of a candidate cell and an indication of signal strength of said first cell.

In some example embodiments, said signal strength indications comprise signal strength measurements used for A3 event determination.

In some example embodiments, said network node is caused to apply said at least one offset in said comparison of signal strength measurements of synchronised and non-synchronised candidate cells and to determine which of said candidate cells is a preferred candidate cell based on said signal strength measurements and said offset.

In some example embodiments, said network node is caused to apply said at least one offset in said comparison of synchronised cells and said first cell when determining whether to perform a handover to said synchronised cell.

In some example embodiments, said network node is caused to apply said at least one offset to signal strength measurements of at least one of said candidate synchronised cells and said candidate non-synchronised cells, such that said candidate synchronised cells have their signal strength measurement preferentially increased compared to said candidate non-synchronised cells.

In some example embodiments, said at least one offset is applied to increase said signal strength measurements of said candidate synchronised cells.

In some example embodiments, said network node is caused to apply said at least one offset as a threshold requirement to said cell comparison such that said cell comparison determines said non-synchronised candidate cell or said first cell to be preferred to said synchronised cell when said non-synchronised cell signal strength measurement or said first cell signal strength indication is greater than said synchronised cell signal strength measurement or indication by more than said threshold.

In some example embodiments, said network node is caused to determine said at least one candidate cell as a target cell to connect to by performing said comparison and determining said preferred candidate cell.

In some example embodiments, said network node is caused to determine whether said UE is to connect to one of said at least one candidate cells by: identifying which of said received signal strength measurements for potential candidate cells are higher than said received first cell signal strength; and where more than one potential candidate cell is determined, selecting the two potential candidate cells with the strongest signals, and identifying which of the two strongest candidate cells is a synchronised candidate cell and which a non-synchronised candidate cell.

In some example embodiments, said network node is further caused to determine whether said UE is to connect to one of said candidate cells based on whether a difference between signal strengths of said strongest synchronised candidate cell and said strongest non-synchronised candidate cell is below one offset value.

In some example embodiments, said network node is caused to perform said comparison of said indication of signal strength of said preferred candidate cell and an indication of signal strength of said first cell and to apply said at least one offset in said comparison where said preferred cell is a synchronised cell; and to trigger a handover to said preferred cell where said comparison provides a difference of greater than a predetermined value.

In some example embodiments, said network node is further caused to: receive an indication as to whether said user equipment has multiple antenna panels, said received signal strength measurements comprising an indication of a panel that said signal strength measurement was measured with; and said network node is caused to apply said offset by applying a first offset where said received measurements indicate a same antenna panel was used for said measurements, and applying a second increased offset where said received signal measurements indicate a different panel was used for said measurements.

In some example embodiments, said network node is caused to determine whether to prioritise synchronised cells over non-synchronised cells by applying said at least one offset in response to one of the following: pre-configuration of said network node, a configuration message received from a central unit, a detected condition determined by said network node.

In some example embodiments, said network node is configured to determine a value of said at least one offset from information in a configuration message received from a central unit.

According to various, but not necessarily all, example embodiments of the invention there is provided a further network node that supports at least one of central unit control plane, CU-CP, functionality or a layer 3 protocol of a radio access network, comprising: at least one processor; and at least one memory storing instruction which, when executed by the at least one processor, cause the further network node at least to: generate a configuration message for transmission to a network node supporting a distributed unit, said configuration message comprising an indication that synchronised candidate cells, that is cells where timing advance (TA) information is available should be prioritised over non-synchronised cells where no timing advance is available.

In some example embodiments, said configuration message indicates said synchronised candidate cells should be prioritised by applying at least one offset in a cell comparison of said synchronised and said non-synchronised cells.

In some example embodiments, said configuration message comprises at least one offset, a value of said at least one offset being indicative of an amount by which said synchronised cells should be prioritised over said non-synchronised cells.

In some example embodiments, said configuration message comprises a plurality of offsets, a first offset for synchronised cells where said user equipment does not comprise multiple antenna panels and a second larger offset for at least some synchronised cells where said user equipment does comprise multiple antenna panels.

In some example embodiments, said configuration comprises an indication that said larger offset is to be used in for synchronised cells where signal measurements for said synchronised cell and a non synchronised are made with different panels.

According to various, but not necessarily all, example embodiments of the invention there is provided a communication network comprising a further network node as described above and at least one network node as described above.

According to various, but not necessarily all, example embodiments of the invention there is provided according to one aspect, a method performed at a network node that supports at least one of the distributed unit, DU, functionality or a layer 2 protocol of a radio access network, and which supports a first cell, said method comprising: establishing a connection with a user equipment apparatus (UE) via the first cell; determining at least one candidate cell with which the UE may connect; determining whether said at least one candidate cell is a synchronised cell where timing advance (TA) information for a potential connection between the UE and the candidate cell is available or a non-synchronised cell where no timing advance information is available; receiving signal strength measurements for potential candidate cells; determining at least one offset to be applied in order to prioritise said synchronised cells over said non-synchronised cells; determining whether said UE is to connect to one of said at least one candidate cells based on said received measurements and said at least one offset.

In some example embodiments, said method comprises receiving signal strength measurements for said first cell; determining whether said UE is to connect to one of said at least one candidate cells by performing at least one comparison of signal strength measurements, said at least one comparison comprising at least one of: a comparison of signal strength measurements of candidate cells; and a comparison of an indication of signal strength of a candidate cell and an indication of signal strength of said first cell.

In some example embodiments, said method comprises applying said at least one offset in said comparison of signal strength measurements of synchronised and non-synchronised candidate cells and determining which of said candidate cells is a preferred candidate cell based on said signal strength measurements and said offset.

In some example embodiments, said method comprises applying said at least one offset in said comparison of synchronised cells and said first cell when determining whether to perform a handover to said synchronised cell.

In some example embodiments, said method comprises applying said at least one offset to signal strength measurements of at least one of said candidate synchronised cells and said candidate non-synchronised cells, such that said candidate synchronised cells have their signal strength measurement preferentially increased compared to said candidate non-synchronised cells.

In some example embodiments, said method comprises applying said at least one offset to increase said signal strength measurements of said candidate synchronised cells.

In some example embodiments, said method comprises applying said at least one offset as a threshold requirement to said cell comparison such that said cell comparison determines said non-synchronised candidate cell or said first cell to be preferred to said synchronised cell when said non-synchronised cell signal strength measurement or said first cell signal strength indication is greater than said synchronised cell signal strength measurement or indication by more than said threshold.

In some example embodiments, said method comprises determining said at least one candidate cell as a target cell to connect to by performing said comparison and determining said preferred candidate cell.

In some example embodiments, said method comprises determining whether said UE is to connect to one of said at least one candidate cells by: identifying which of said received signal strength measurements for potential candidate cells are higher than said received first cell signal strength; and where more than one potential candidate cell is determined, selecting the two potential candidate cells with the strongest signals, and identifying which of the two strongest candidate cells is a synchronised candidate cell and which a non-synchronised candidate cell.

In some example embodiments, said method comprises determining whether said UE is to connect to one of said candidate cells based on whether a difference between signal strengths of said strongest synchronised candidate cell and said strongest non-synchronised candidate cell is below one offset value.

In some example embodiments, said method comprises performing said comparison of said indication of signal strength of said preferred candidate cell and an indication of signal strength of said first cell and applying said at least one offset in said comparison where said preferred cell is a synchronised cell; and triggering a handover to said preferred cell where said comparison provides a difference of greater than a predetermined value.

In some example embodiments, said method comprises receiving an indication as to whether said user equipment has multiple antenna panels, said received signal strength measurements comprising an indication of a panel that said signal strength measurement was measured with; and applying said offset by applying a first offset where said received measurements indicate a same antenna panel was used for said measurements, and applying a second increased offset where said received signal measurements indicate a different panel was used for said measurements.

In some example embodiments, said method comprises determining whether to prioritise synchronised cells over non-synchronised cells by applying said at least one offset in response to one of the following: pre-configuration of said network node, a configuration message received from a central unit, a detected condition determined by said network node.

In some example embodiments, said method comprises determining a value of said at least one offset from information in a configuration message received from a central unit.

According to various, but not necessarily all, example embodiments of the invention there is provided according to one further aspect, a method performed at a further network node that supports at least one of central unit control plane, CU-CP, functionality or a layer 3 protocol of a radio access network, said method comprising: generating a configuration message for transmission to a network node supporting a distributed unit, said configuration message comprising an indication that synchronised candidate cells, that is cells where timing advance (TA) information is available should be prioritised over non-synchronised cells where no timing advance is available.

According to various, but not necessarily all, example embodiments of the invention there is provided a computer program comprising computer readable instructions which when executed by a processor on a network node is operable to control said network node to perform a method according to one or one further aspect.

The instructions may be for performing the optional features of example embodiments set out in relation to the method mentioned above.

According to various, but not necessarily all, example embodiments of the invention there is provided a non-transitory computer readable medium comprising program instructions stored thereon for performing:

> establishing a connection with a user equipment apparatus (UE) via the first cell;
> determining at least one candidate cell with which the UE may connect; determining whether said at least one candidate cell is a synchronised cell where timing advance (TA) information for a potential connection between the UE and the candidate cell is available or a non-synchronised cell where no timing advance information is available;
> receiving signal strength measurements for potential candidate cells;
> determining at least one offset to be applied in order to prioritise said synchronised cells over said non-synchronised cells;
> determining whether said UE is to connect to one of said at least one candidate cells based on said received measurements and said at least one offset.

According to various, but not necessarily all, example embodiments of the invention there is provided a non-transitory computer readable medium comprising program instructions stored thereon for performing:
generating a configuration message for transmission to a network node supporting a distributed unit, said configuration message comprising an indication that synchronised candidate cells, that is cells where timing advance (TA) information is available should be prioritised over non-synchronised cells where no timing advance is available.

According to various, but not necessarily all, example embodiments of the invention there is provided a network node that supports at least one of the distributed unit, DU, functionality or a layer 2 protocol of a radio access network, and which supports a first cell, said network node comprising: means for establishing a connection with a user equipment apparatus (UE) via the first cell; means for determining at least one candidate cell with which the UE may connect; said means for determining, determining whether said at least one candidate cell is a synchronised cell where timing advance (TA) information for a potential connection between the UE and the candidate cell is available or a non-synchronised cell where no timing advance information is available; means for receiving signal strength measurements for potential candidate cells; means for determining at least one offset to be applied in order to prioritise said synchronised cells over said non-synchronised cells; means for determining whether said UE is to connect to one of said at least one candidate cells based on said received measurements and said at least one offset.

In some example embodiments, said means for determining whether said UE is to connect to one of said at least one candidate cells comprises means for performing at least one comparison of signal strength measurements, said at least one comparison comprising at least one of: a comparison of signal strength measurements of candidate cells; and a comparison of an indication of signal strength of a candidate cell and an indication of signal strength of said first cell.

In some example embodiments, network further comprises means for applying said at least one offset in said comparison of signal strength measurements of synchronised and non-synchronised candidate cells and said means for determining determines which of said candidate cells is a preferred candidate cell based on said signal strength measurements and said offset.

In some example embodiments, said means for applying is configured to apply said at least one offset in said comparison of synchronised cells and said first cell when determining whether to perform a handover to said synchronised cell.

In some example embodiments, said means for applying is configured to apply said at least one offset to signal strength measurements of at least one of said candidate synchronised cells and said candidate non-synchronised cells, such that said candidate synchronised cells have their signal strength measurement preferentially increased compared to said candidate non-synchronised cells.

In some example embodiments, said means for applying is configured to apply said at least one offset to increase said signal strength measurements of said candidate synchronised cells.

In some example embodiments, said means for applying is configured to apply said at least one offset as a threshold requirement to said cell comparison such that said cell comparison determines said non-synchronised candidate cell or said first cell to be preferred to said synchronised cell when said non-synchronised cell signal strength measurement or said first cell signal strength indication is greater than said synchronised cell signal strength measurement or indication by more than said threshold.

In some example embodiments, said means for determining determines said at least one candidate cell as a target cell to connect to by performing said comparison and determining said preferred candidate cell.

In some example embodiments, said means for determining determines whether said UE is to connect to one of said at least one candidate cells by: identifying which of said received signal strength measurements for potential candidate cells are higher than said received first cell signal strength; and where more than one potential candidate cell is determined, selecting the two potential candidate cells with the strongest signals, and identifying which of the two strongest candidate cells is a synchronised candidate cell and which a non-synchronised candidate cell.

In some example embodiments, said means for determining whether said UE is to connect to one of said candidate cells is based on a difference between signal strengths of said strongest synchronised candidate cell and said strongest non-synchronised candidate cell being below one offset value.

In some example embodiments, said means for receiving is configured to receive an indication as to whether said user equipment has multiple antenna panels, said received signal strength measurements comprising an indication of a panel that said signal strength measurement was measured with; and said means for applying is configured to apply said offset by applying a first offset where said received measurements indicate a same antenna panel was used for said measurements, and applying a second increased offset where said received signal measurements indicate a different panel was used for said measurements.

In some example embodiments, said means for determining is configured to determine whether to prioritise synchronised cells over non-synchronised cells by applying said at least one offset in response to one of the following: pre-configuration of said network node, a configuration message received from a central unit, a detected condition determined by said network node.

In some example embodiments, means for determining a value of said at least one offset is configured to determine said value from information in a configuration message received from a central unit.

According to various, but not necessarily all, example embodiments of the invention there is provided, a further network node that supports at least one of central unit control plane, CU-CP, functionality or a layer 3 protocol of a radio access network, said further network node comprising: means for generating a configuration message for transmission to a network node supporting a distributed unit, said configuration message comprising an indication that synchronised candidate cells, that is cells where timing advance (TA) information is available should be prioritised over non-synchronised cells where no timing advance is available.

According to various, but not necessarily all, example embodiments of the invention there is provided, a network node that supports at least one of the distributed unit, DU, functionality or a layer 2 protocol of a radio access network, and which supports a first cell, said network node comprising: connecting circuitry configured to establish a connection with a user equipment apparatus (UE) via the first cell; cell determining circuitry configured to determine at least one candidate cell with which the UE may connect and to determine whether said at least one candidate cell is a synchronised cell where timing advance (TA) information for a potential connection between the UE and the candidate cell is available or a non-synchronised cell where no timing advance information is available; receiving circuitry configured to receive signal strength measurements for potential candidate cells; prioritising circuitry configured to determine at least one offset to be applied in order to prioritise said synchronised cells over said non-synchronised cells; wherein said cell determining circuitry is configured to whether said UE is to connect to one of said at least one candidate cells based on said received measurements and said at least one offset.

In some example embodiments, said receiving circuitry is configured to receive signal strength measurements for said first cell; and said cell determining circuitry is configured to determine whether said UE is to connect to one of said at least one candidate cells by performing at least one comparison of signal strength measurements, said at least one comparison comprising at least one of: a comparison of signal strength measurements of candidate cells; and a comparison of an indication of signal strength of a candidate cell and an indication of signal strength of said first cell.

In some example embodiments, said prioritising circuitry is configured to apply said at least one offset in said comparison of signal strength measurements of synchronised and non-synchronised candidate cells and said cell determining circuitry is configured to determine which of said candidate cells is a preferred candidate cell based on said signal strength measurements and said offset.

In some example embodiments, said prioritising circuitry is configured to apply said at least one offset in said comparison of synchronised cells and said first cell when determining whether to perform a handover to said synchronised cell.

In some example embodiments, said prioritising circuitry is configured to apply said at least one offset to signal strength measurements of at least one of said candidate synchronised cells and said candidate non-synchronised cells, such that said candidate synchronised cells have their signal strength measurement preferentially increased compared to said candidate non-synchronised cells.

In some example embodiments, said prioritising circuitry is configured to apply said at least one offset to increase said signal strength measurements of said candidate synchronised cells.

In some example embodiments, said prioritising circuitry is configured to apply said at least one offset as a threshold requirement to said cell comparison such that said cell comparison determines said non-synchronised candidate cell or said first cell to be preferred to said synchronised cell when said non-synchronised cell signal strength measurement or said first cell signal strength indication is greater than said synchronised cell signal strength measurement or indication by more than said threshold.

In some example embodiments, said cell determining circuity is configured to determine said at least one candidate cell as a target cell to connect to by performing said comparison and determining said preferred candidate cell.

In some example embodiments, said cell determining circuitry is configured to determine whether said UE is to connect to one of said at least one candidate cells by: identifying which of said received signal strength measurements for potential candidate cells are higher than said received first cell signal strength; and where more than one potential candidate cell is determined, selecting the two potential candidate cells with the strongest signals, and identifying which of the two strongest candidate cells is a synchronised candidate cell and which a non-synchronised candidate cell.

In some example embodiments, said cell determining circuitry is configured to determine whether said UE is to connect to one of said candidate cells based on whether a difference between signal strengths of said strongest synchronised candidate cell and said strongest non-synchronised candidate cell is below one offset value.

In some example embodiments, said cell determining circuitry is configured to compare said indication of signal strength of said preferred candidate cell and an indication of signal strength of said first cell and said prioritising circuitry is configured to apply said at least one offset in said comparison where said preferred cell is a synchronised cell; and said cell determining circuitry is configured to trigger a handover to said preferred cell where said comparison provides a difference of greater than a predetermined value.

In some example embodiments, said receiving circuitry is configured to receive an indication as to whether said user equipment has multiple antenna panels, said received signal strength measurements comprising an indication of a panel that said signal strength measurement was measured with; and said prioritising circuitry is configured to apply said offset by applying a first offset where said received measurements indicate a same antenna panel was used for said measurements, and applying a second increased offset where said received signal measurements indicate a different panel was used for said measurements.

In some example embodiments, said cell determining circuitry is configured to determine whether to prioritise synchronised cells over non-synchronised cells by applying said at least one offset in response to one of the following: pre-configuration of said network node, a configuration message received from a central unit, a detected condition determined by said network node.

In some example embodiments, said cell determining circuitry is configured to determine a value of said at least one offset from information in a configuration message received from a central unit.

According to various, but not necessarily all, example embodiments of the invention there is provided a further network node that supports at least one of central unit control plane, CU-CP, functionality or a layer 3 protocol of a radio access network, said further node comprising: generating circuitry configured to generate a configuration message for transmission to a network node supporting a distributed unit, said configuration message comprising an indication that synchronised candidate cells, that is cells where timing advance (TA) information is available should be prioritised over non-synchronised cells where no timing advance is available.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION

Some example embodiments will now be described with reference to the accompanying drawings in which:

FIG. 1 illustrates an example scenario of L1 RSRP measurements performed by a UE for a serving cell and target cells one of them synchronised and one not where cell change is to the cell with the strongest signal;
FIG. 2 illustrates an example scenario of L1 RSRP measurements performed by a UE for a serving cell and target sync and non-sync cells, where a late change to a sync cell results in increased latency;
FIG. 3 illustrates an example scenario of a cell switch based on sync status; and
Fig.4a and 4b illustrate different scenarios where a cell change is performed according to an embodiment and a cell is selected in dependence upon signal strength and synchronisation status;
Fig. 5 illustrates a signalling diagram showing signalling according to an embodiment; and
Fig. 6 shows a wireless communication network comprising a distributed unit DU and a central unit CU according to an embodiment.

DETAILED DESCRIPTION

Before discussing the example embodiments in any more detail, first an overview will be provided.

7

It was recognised that when performing LTM, where a UE may have performed early timing advance (TA) with some cells, which cells are termed synchronised cells then preferentially selecting one of these cells for a handover may be advantageous and may reduce latency.

Embodiments seek to provide a way of prioritising the synchronised cells over the non-synchronised such that they are preferentially selected to a certain extent, that extent being controllable by controlling an offset applied.

The offset may be used to increase the signal strength measurements of the synchronised cells compared to the non-synchronised ones, such that their signal strength is preferentially increased. This may be done by increasing the strength of the sync cells' signals and/or decreasing the strength of the no-sync cells. In some cases there may be different offsets for different types of synchronised cells, such that those with multiple antenna panels for example may have an increased offset in certain circumstances.

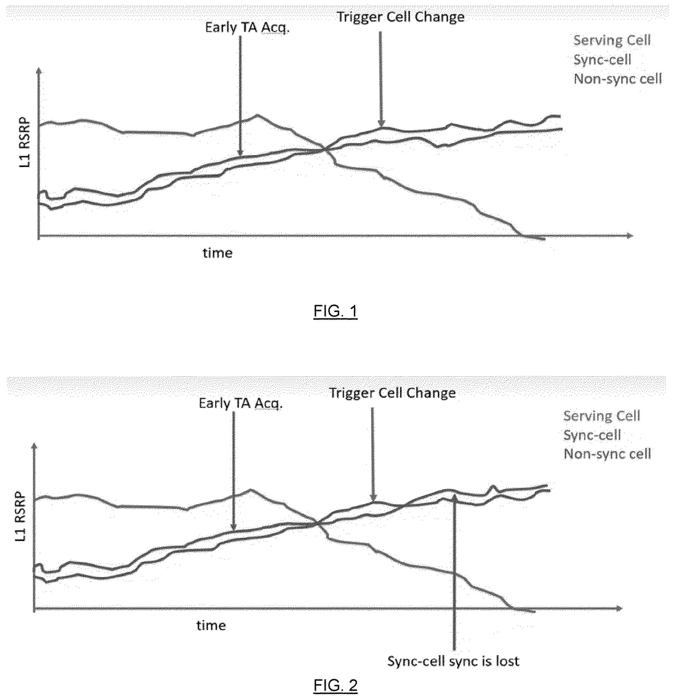

Figs. 1 - 3 illustrate different scenarios where a cell change is triggered from the serving cell to potential target cells, which target cells could be either synchronized cells or non-synchronized cells.

The Figs show the L1 RSRP (level 1 reference signal received power) measurements of the cells that the UE measures periodically. The graphs show the signal strength measurements of the serving cell and two candidate cells, one being a synchronised cell, that is one that has acquired an early timing advance and one a non-synchronised cell where no timing advance has been acquired.

In the case of the synchronized cell, it is assumed that the handovers (HOs) are cost free with negligible or no interruptions while a cell change to a non-synchronized cell involves interruptions as it requires the initiation of a conventional random access procedure.

Fig. 1 shows how early timing advance information is acquired for a cell which then becomes a synchronised cell. Although this cell is the strongest cell during the TA acquisition, the non-synchronised cell becomes slightly stronger and by the time of the cell switch decision is the stronger cell, a stronger cell is one where the L1 measurements received at the UE are stronger for this cell. Were the source -DU to decide on the cell switch based on the strongest signal strength measurement then in the case of Fig. 1 the non-synchronized cell would be selected and the UE would handover to this cell via RACH (random access channel) procedure which is subject to interruption (since the cell is not synchronised and RACH leads to further interruption). In that case, since the sync cell is also good enough for the UE to handover to, the UE misses the opportunity of HO to a synchronised cell with reduced interruption time if the decision is made solely on signal strength.

Fig. 2 illustrates a further scenario where a cell that was strongest at the time of preparation may not be the strongest cell shortly after execution. This scenario is more likely if there is another cell that has an RSRP close to the strongest cell. In this case if the S-DU selects the non-sync cell with the associated interruption and then wants HO to select the sync cell which has become the strongest, it will lead to further interruption as the TA acquired for this cell may no longer be valid at this point.

Thus, in the Fig. 2 scenario, the UE experiences interruptions twice. The first interruption is during cell switch from serving cell to non-sync cell and the second interruption from the non-sync cell to the 'sync' cell which cell was previously synchronised but by this point has lost synchronisation as TA acquired earlier is no longer valid (due to UE mobility).

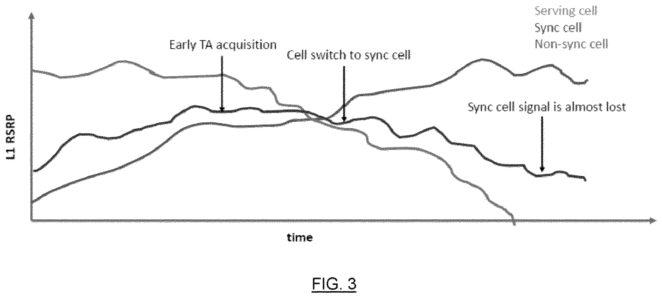

Fig 3 shows an alternative scenario where the cell switch procedure forces the selection of a sync cell irrespective of differences in signal strength between no-sync and sync cells. In this case where after the execution phase, the signal strength of the sync cell degrades, then the sync cell signal is eventually lost.

Cell switch decisions based purely on sync or non-sync status ignoring the cell strength can inevitably lead to RLF (radio link failure).

Embodiments propose a method where the cells with known TA are leveraged such that the S-DU does not only decide on the cell switch based on the strongest cell but also considers the sync status of the target cell in the decision.

In a first embodiment the method triggers a cell change to the synchronized cell even if the L1 measurement of the non-synchronized cell is slightly (e.g. 1 to 2 dB) better than that of the synchronized cell.

In a second embodiment a synchronized cell offset is introduced to the A3 event trigger condition which facilitates a positive bias towards selection of the synchronized cell for cell change compared to the non-synchronized cell if and only if their signal strength difference is within a specified threshold (for example 1 to 2 dB).

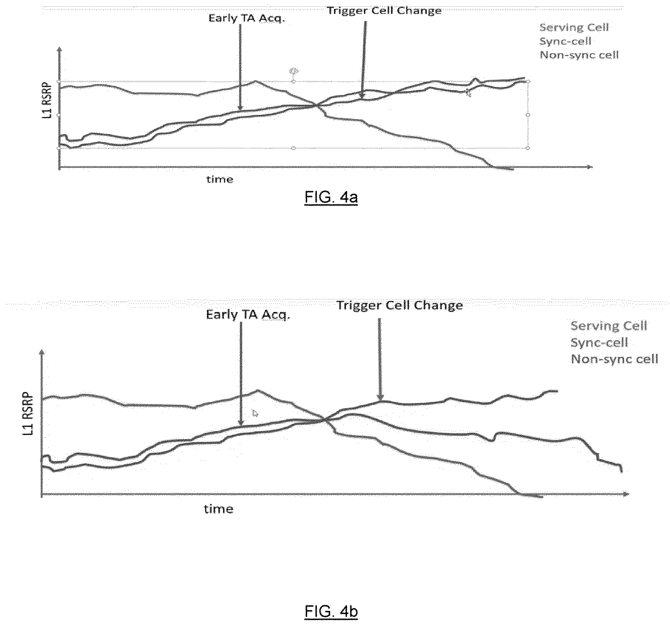

Impact of the proposed embodiments are shown in the scenarios illustrated in Fig. 4a and 4b:

As shown in Fig 4a, although the L1 RSRP measurement of the non-synchronized cell is slightly better at HO, HO is still triggered to sync-cell (with early TA advance information) as the sync cell's signal strength is within the threshold or offset amount of the non-sync cell.

In this example, the sync cell behaviour improves, and this becomes the best possible scenario as only one cost-free HO to sync cell is involved.

In Fig 4b, cell change is triggered initially to the sync cell which then subsequently has a signal that degrades and where a further cell change is required it is decided to trigger cell change to non-sync cell as it has significantly higher L1 RSRP at this point.

Though there are two handovers involved in this process (serving cell to sync cell and sync-cell to non-sync cell), there is only one interruption as HO to sync-cell is cost free (interruption free). Had the decision been based solely on signal strength then there would still have been one interruption triggering cell change from serving cell to the non-sync cell directly.

Several embodiments are described below which allow a candidate cell to be selected for a cell change based both on signal strength and on the cells' synchronised status. In embodiments one or more predetermined offsets are provided, a size of the offsets defining an amount by which a synchronised cell is prioritised over a non-synchronised cell. Thus, embodiments allow not only the synchronised status of the cell to be considered along with the signal strength but provide some control over the weight that each of the two factors are given in the handover decision.

In an example of the first embodiment - alt #1a, the source DU adds an offset to the reported measurements of the in sync cells and then compares all measurements reported to determine the cell switch.

For example: Received L1 RSRP measurement report at S-DU from one of the sync cell =-105 dB;

S-DU introduces an additional offset of 2 dB only for the sync cell measurements
Current L1 RSRP measurement for current sync cell becomes (-105+2= -103 dB)
A comparison of signal strength is then made with other non-sync cells
If L1 measurement report of non-sync cell is -104 dB, S-DU will select sync cell which has strength of -103 dB (1 dB greater than non-sync cell due to the introduced offset).

In this example, the offset is set to 2 dB, however, it can be set to any other value, that can be decided by the network (CU/DU/OAM central unit/distributed unit/operations administration and maintenance) based on the cell border characteristics.

In an alternative example of the first embodiment alt #1b, where the UE is a MPUE, that is a UE with multiple antenna panels the offset applied may be slightly different.

In this case were the UE to use two different panels for the sync cell and non-sync cell RSRP measurements, HO to weaker sync cell will not be problematic because even if the RSRP difference between the two target cells (sync and non-sync) is large, the UE can survive with HO to the sync cell (as long as RSRP is not significantly below the noise floor of -171 dB/Hz).

In this case the S-DU introduces an additional offset of 5 dB only for the in sync cell measurements if the serving panel and the non-serving panel (used to acquire the TA for early sync) are different. If they are the same then the previous offset for single panel UEs of 2dB may be used.

Current L1 RSRP measurement for current sync cell where different panels are used becomes (-105+5= -100 dB)

Compare with other non-sync cells
If L1 measurement report of non-sync cell is -104 dB, S-DU will select sync cell which has strength of -100 dB (4 dB greater than non-sync cell due to the introduced offset).

An example of the second embodiment alt #2a is provided below. In this case the embodiment is concerned with an A3 Event triggered HO in LTM, where again some prioritization of sync cells over non-sync cells is provided.

In this case cell change trigger is sent by source DU. The CU is expected to know how to decide on the HO. In LTM framework, the CU will configure the source DU in a way that the source DU will monitor the L1 measurements of the UE and decide on the LTM cell switch trigger in a way that the CU wants the DU to perform.

The source DU should be informed of this sub-order and of prioritization of the synchronized cells (the target cells with valid TA). In some embodiments in order to do this the A3 condition is defined to use an additional offset for the synchronized cell.

The offset will leverage execution of the HO to the sync cell which will have an effect in cases where the non-synchronized cell are marginally better than the sync cell.

An A3 handover event occurs when the candidate cell signal becomes stronger than the serving cell signal by more than a predetermined offset Off and a hysteresis value Hys. The proposed modified A3 Event involves an additional offset Offsync that is applied to prioritise a synchronised cell over one that has not acquired an earl timing advance.

The procedure may comprise a comparison of signal strengths of a serving cell with candidate cells. Where several candidate cells are found to be stronger than the serving cell by the offsets or predetermined amount required to trigger a handover, then the two strongest may be selected and compared to determine the target cell. The offset to prioritise the synchronised cells may be used in the comparison.

In the equation below Mn relates to the signal strength of a candidate or neighbouring cells and Mp relates to signal strength of the serving cell. The factors Ofn and Ocn are offsets relating to frequency and other factors of the cells and Hys is the hysteresis that sets a threshold level along with offset Off required to trigger a handover. In this embodiment there is also a Ofsync which is an additional offset applied to a synchronised cell to prioritise it over a non-synchronised cell.

In this example procedure initially when selecting potential cells for a handover the candidate cells signal strengths' Mn are compared with the serving cell signal strengths Mp, for candidate cells tar-1 and tar -2. Tar-1 is a sync cell and therefore has its strength increased by the offset amount Ofsync. In this example a different non sync offset nOfsync may be applied to the cell tar-2.

$$Mn\_\{tar\text{-}1\} + Ofn + Ocn - Hys\text{-}Ofsync > Mp + Ofp + Ocp + Off$$

$$Mn\_\{tar\text{-}2\} + Ofn + Ocn - Hys\text{-}nOfsync > Mp + Ofp + Ocp + Off$$

Where the above two equations are true then the two cells tar_1 and tar_2 are selected as potential target cells for the handover. The preferred cell is then selected by comparing their A3 event triggered handover values, with the offset Ofsync and nOfsync applied to preferentially increase the strength of the sync cell over the non-sync cell. In this case it is found that:

$$Mn\_\{tar\text{-}1\} + Ofn + Ocn - Hys\text{-}Ofsync > Mn\_\{tar\text{-}2\} + Ofn + Ocn - Hys\text{-}nOfsync$$

In this example a value of the sync offset Ofsync = -2 dB (sync-cell) and for the nonsycn cell a value of nOfsync= 0 dB (non-sync cell). In other words no offset is applied to the non-sync cell in this case.

In an example

$$Mn\_\{tar\text{-}2\} + Ofn + Ocn - Hys = \text{-}103.5\ dB\ ,$$

$$Mn\_\{tar\text{-}1\} + Ofn + Ocn - Hys = \text{-}104\ dB$$

A3 Event trigger for non-sync cell with offset= -103.5 dB. A3 Event trigger for sync cell with offset= -102 dB, (-104 +2 ) which is greater than the non-sync cell. Cell HO may be triggered to the sync-cell. The A3 event trigger, or in general the determining of whether the UE is to connect to one of said at least one candidate cells based on said received measurements and said at least one offset, may help to identify a preferred candidate cell to connect to. The cell for which a cell HO is finally triggered may depend on other criteria as well, e.g. traffic load of a cell or other. Connecting a UE with a (candidate target) cell may not be limited to cell HO, but may include e.g. carrier aggregation, dual connectivity, multiTRP operation, dynamic switching, or other.

An alternative of the above embodiment with MPUE - alt #2b, provides two potential offsets to be applied to prioritise the sync cells differently depending on whether the UE has received the L1 measurements being compared for the sync and non-sync cell from different panels of the UE or not.

So in this case the example is as above except that Ofsync = -5 dB (sync cell) and Ofsync = 0 dB (non-sync cell), where the panels for the L1 RSRP measurements are different for the sync and non-sync cells.

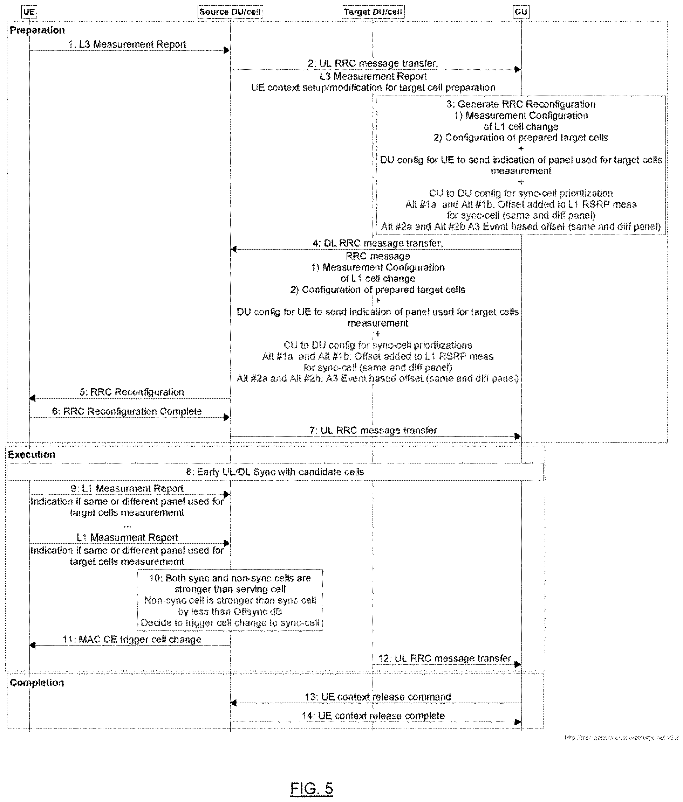

Fig. 5 shows a signalling flow diagram according to an embodiment.

In steps 1&2: an L3 measurement report is transmitted by the UE to the S-DU which in turn is shares the report with the CU for UE context set up for target cell preparation.

Step-3: RRC Reconfiguration is generated by the CU that includes measurement configuration that UE needs to report for L1 cell change, configuration of the prepared cells which in addition includes CU to DU configuration for sync cell prioritization. This may include Alternative-1a/1b and Alternative-2a/2b as discussed above.

In addition in this step, the CU configures DU to obtain the indication from UE as to whether the same or different panels are used to obtain the target cells' measurements. If they are from the same panel, Alternative 1a and 2a are used and if they are from two different panels then 1b and 2b can be used.

Step-4: RRC Reconfiguration message is provided to the source DU.

Step-5: RRC Reconfiguration message is relayed to the UE through source DU.

Step-6 & Step-7: RRC Reconfiguration complete message is transmitted by the UE and relayed back to the CU indicating completion of the preparation phase.

Step-8: comprises early synchronization for the prepared cells that includes TA information acquisition for the prepared cells rendering them so-called sync cells.

Step-9: comprises the periodic receipt from the UE of the L1 measurement reports. These may include an indication, if the UE has multiple antenna panels, of which panel has been used for which measurement.

In this example upon reception of the L1 measurement reports from UE at the S-DU, the S-DU decides to trigger cell change to a sync cell even if a non-sync is slightly better than the sync cell provided that it is better by less than an offset (1 to 2 dB) if a same single panel is used for measurements and a larger offset 5 dB for the MPUE scenario where two different panels are used to obtain the target cells measurement.

Step-10: The S-DU triggers the cell change using MAC CE command.

Step-11 & Step-12: RRC Reconfiguration Complete message is transmitted from UE to the target-DU which is shared with the CU to mark the completion of the execution phase of the LTM.

Step-13 & Step-14: UE context release command is transferred from the CU to the S-DU and the UE context release message is sent back to the CU which marks the completion phase of the LTM.

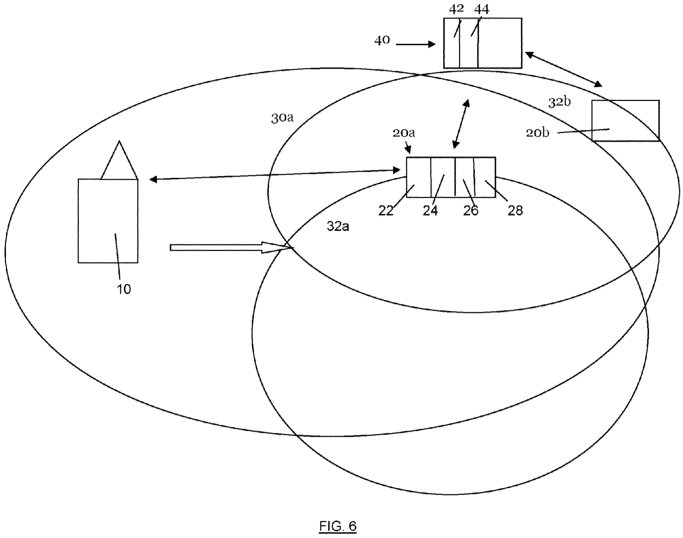

Fig. 6 schematically shows a wireless communications network according to an embodiment where a UE 10 is moving through the cells of this network. In Fig. 6 UE 10 is in serving cell 30a where radio coverage is supported by source distributed unit DU 20a and it is in the vicinity of cell 32a provided by distributed unit 20a and cell 32b provided by distributed unit 20b. Distributed units 20a and 20b are supported by central unit CU 40.

The UE generates an L3 measurement report that it forwards to the source DU 20a which receives the report using transmitting and receiving circuitry 22. DU 20a then forwards the report to the CU 40. Message generating circuitry 42 in CU 40 generates a RRC message indicating configuration information for prioritising synchronised cells over non-synchronised cells in handover decisions. This configuration includes one or more offset values and an indication as to whether a multiple panel UE should indicate the panel used to generate an L1 measurement report for a cell.

The CU 40 transmits the message using transmitting and receiving circuitry 44 to the source DU 20a, the message includes the configuration information for sync cell prioritisation including the one or more offsets.

Lower layer triggered mobility preparation and an early acquisition of TA for cell 32b is performed rendering the cell 32b a sync cell, it is not performed for cell 32a and thus, this is a non-sync cell.

User equipment 10 then transmits an L1 measurement report to distributed unit 20a. Transmitting and receiving circuitry 22 at DU 20a receives the report and cell prioritising circuitry 24 in DU 20a determines from the messages received from CU 40 that sync cells are to be prioritised. Prioritising circuitry 24 then applies the offset received in the configuration message, to the L1 measurements received for sync cell 32b. Cell determining circuitry 26 that comprises a comparator then compares the L1 measurements for sync cell 32b (with the offset applied to increase the signal strength of this measurement), with the L1 measurement of non-sync cell 32a. The cell that the comparator determines to be the cell with the highest signal strength is then selected as the preferred candidate cell for a handover.

It should be noted that in the determination of the preferred candidate cell the offset may be applied in a number of ways, for example as described above by increasing the signal strength measurement of the sync cell, or alternatively by decreasing the signal strength measurement of the non-sync cell, or as a threshold value by which the non-sync cell must have a higher signal strength than the sync cell in order to be preferred. It should also be noted that where UE 10 is a multiple panel UE then in some embodiments there may be more than one offset that can be applied, a larger one where the L1 measurements for sync cell 32b are made by one panel and those for non-sync cell 32a by another and a smaller one where they are measured using the same panel. The smaller one may be the same offset used for single panel UEs.

Having selected a preferred candidate cell, connecting control circuitry 28 may then determine when a handover trigger event is detected for this preferred candidate cell and initiate handover to the cell.

In summary embodiments address the following scenarios: non-sync cell is marginally stronger than sync cell, non-sync cell is weaker than the sync cell, and non-sync cell is significantly stronger than the sync cell.

The prioritising of HO to the sync -cell in embodiments, doesn't impact on the interruption time even if the non-sync cell (target cell 2) later becomes preferred over the sync-cell.

In LTM, UE maintains the configuration of the non-sync cell as part of LTM preparation.

If non-sync cell gets much stronger immediately after HO to sync-cell, immediate cellchange trigger to non-sync cell is possible.

No significant changes on top of existing LTM signalling flow are required in the implementation of the embodiments.

Additional interruptions, delay and processing overheads due to cell HOs especially in FR2 are reduced.

The following description may provide further details of alternatives, modifications and variances: a gNB comprises e.g. a node providing NR user plane and control plane protocol terminations towards the UE, and connected via the NG interface to the 5GC, e.g. according to 3GPP TS 38.300 V16.6.0 (2021-06) section 3.2 incorporated by reference.

A gNB Central Unit (gNB-CU) comprises e.g. a logical node hosting e.g. RRC (radio resource control), SDAP (service data adaptation protocol) and PDCP (packet data convergence protocol) protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g. a logical node hosting e.g. RLC (radio link control), MAC (medium access control) and PHY (physical) layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g. a logical node hosting e.g. the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g. a logical node hosting e.g. the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g. according to 3GPP TS 38.401 V16.6.0 (2021-07) section 3.1 incorporated by reference.

Different functional splits between the central and distributed unit are possible, e.g. called options:

Option 1 (1A-like split):

- The function split in this option is similar to the 1A architecture in DC. RRC is in the central unit. PDCP, RLC, MAC, physical layer and RF are in the distributed unit.

Option 2 (3C-like split):

- The function split in this option is similar to the 3C architecture in DC. RRC and PDCP are in the central unit. RLC, MAC, physical layer and RF are in the distributed unit.

Option 3 (intra RLC split):

- Low RLC (partial function of RLC), MAC, physical layer and RF are in the distributed unit. PDCP and high RLC (the other partial function of RLC) are in the central unit.

Option 4 (RLC-MAC split):

- MAC, physical layer and RF are in the distributed unit. PDCP and RLC are in the central unit.

Or else, e.g. according to 3GPP TR 38.801 V14.0.0 (2017-03) section 11 incorporated by reference.

A gNB supports different protocol layers, e.g. Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.: The physical layer offers to the MAC sublayer transport channels;

- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. to segmentation;
- Control channels include (BCCH, PCCH).

Layer 3 (L3) includes e.g. Radio Resource Control (RRC), e.g. according to 3GPP TS 38.300 V16.6.0 (2021-06) section 6 incorporated by reference.

A RAN (Radio Access Network) node or network node or central node or distributed node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3. They may also be implemented using specific means configured to perform respective specific tasks, e.g. layer 3 means to perform layer 3 operations, layer 2 means to perform layer 2 operations, etc. A central node may e.g. implement CU-CP and/or CP-UP functionality.

The gNB CU and gNB DU parts may e.g. be co-located or physically separated. The gNB DU may even be split further, e.g. into two parts, e.g. one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof.

A gNB-DU supports one or multiple cells, and could thus serve as e.g. a serving cell for a user equipment (UE).

A user equipment (UE) may include a wireless or mobile device, an apparatus with a radio interface to interact with a RAN (Radio Access Network), a smartphone, an invehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g. configured to generate a message (e.g. including a cell ID) to be transmitted via radio towards a RAN (e.g. to reach and communicate with a serving cell). A UE may generate and transmit and receive RRC messages containing one or more RRC PDUs (Packet Data Units).

The UE may have different states (e.g. according to 3GPP TS 38.331 V16.5.0 (2021-06) sections 42.1 and 4.4, incorporated by reference).

A UE is e.g. either in RRC_CONNECTED state or in RRC_INACTIVE state when an RRC connection has been established.

In RRC_CONNECTED state a UE may:

store the AS context;

- transfer unicast data to/from the UE;
- monitor control channels associated with the shared data channel to determine if data is scheduled for the data channel;
- provide channel quality and feedback information;
- perform neighboring cell measurements and measurement reporting;

The RRC protocol includes e.g. the following main functions:

- RRC connection control;
- measurement configuration and reporting;
- establishment/modification/release of measurement configuration (e.g. intrafrequency, inter-frequency and inter-RAT measurements);
- setup and release of measurement gaps;

- measurement reporting.

A person of skill in the art would readily recognize that steps of various above-described methods can be performed by programmed computers. Herein, some embodiments are also intended to cover program storage devices, e.g., digital data storage media, which are machine or computer readable and encode machineexecutable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. A network node that supports at least one of the distributed unit, DU, functionality or a layer 2 protocol of a radio access network, and which supports a first cell, comprising:

    at least one processor; and
    at least one memory storing instruction which, when executed by the at least one processor, cause the network node at least to:

        establish a connection with a user equipment apparatus (UE) via the first cell;
        determine at least one candidate cell with which the UE may connect;
        determine whether said at least one candidate cell is a synchronised cell where timing advance (TA) information for a potential connection between the UE and the candidate cell is available or a non-synchronised cell where no timing advance information is available;
        receive signal strength measurements for potential candidate cells;
        determine at least one offset to be applied in order to prioritise said synchronised cells over said non-synchronised cells;
        determine whether said UE is to connect to one of said at least one candidate cells based on said received measurements and said at least one offset.

2. A network node according to claim 1, wherein said network node is caused to

    receive signal strength measurements for said first cell; and
    determine whether said UE is to connect to one of said at least one candidate cells by performing at least one comparison of signal strength measurements, said at least one comparison comprising at least one of:

        a comparison of signal strength measurements of candidate cells; and
        a comparison of an indication of signal strength of a candidate cell and an indication of signal strength of said first cell.

3. A network node according to claim 2, wherein said network node is caused to apply said at least one offset in said comparison of signal strength measurements of synchronised and non-synchronised candidate cells and to determine which of said candidate cells is a preferred candidate cell based on said signal strength measurements and said offset.

4. A network node according to claim 2 or 3, wherein said network node is caused to apply said at least one offset in said comparison of synchronised cells and said first cell when determining whether to perform a handover to said synchronised cell.

5. A network node according to claim 2 or 3, wherein said network node is caused to apply said at least one offset to signal strength measurements of at least one of said candidate synchronised cells and said candidate non-synchronised cells, such that said candidate synchronised cells have their signal strength measurement preferentially increased compared to said candidate non-synchronised cells.

6. A network node according to claim 5, wherein said at least one offset is applied to increase said signal strength measurements of said candidate synchronised cells.

7. A network node according to claim 2 or 3, wherein said network node is caused to apply said at least one offset as a threshold requirement to said cell comparison such that said cell comparison determines said non-synchronised candidate cell or said first cell to be preferred to said synchronised cell when said non-synchronised cell signal strength measurement or said first cell signal strength indication is greater than said synchronised cell signal strength measurement or indication by more than said threshold.

8. A network node according to any one of claims 3 to 7, said network node being caused to determine said at least one candidate cell as a target cell to connect to by performing said comparison and determining said preferred candidate cell.

9. A network node according to any preceding claim, said network node being caused to determine whether said UE is to connect to one of said at least one candidate cells by:

   Identifying which of said received signal strength measurements for potential candidate cells are higher than a received first cell signal strength; and where more than one potential candidate cell is determined, selecting the two potential candidate cells with the strongest signals, and identifying which of the two strongest candidate cells is a synchronised candidate cell and which a non-synchronised candidate cell.

10. A network node according to any preceding claim, wherein said network node is further caused to determine whether said UE is to connect to one of said candidate cells based on whether a difference between signal strengths of said strongest synchronised candidate cell and said strongest non-synchronised candidate cell is below one offset value.

11. A network node according to any one of claims 3, or 4 to 8 when dependent upon claim 3, wherein said network node is caused to perform said comparison of said indication of signal strength of said preferred candidate cell and an indication of signal strength of said first cell and to apply said at least one offset in said comparison where said preferred cell is a synchronised cell; and to trigger a handover to said preferred cell where said comparison provides a difference of greater than a predetermined value.

12. A network node according to any preceding claim, wherein said network node is further caused to determine whether said UE is to connect to one of said candidate cells based on a difference between signal strengths of said strongest synchronised candidate cell and said strongest non-synchronised candidate cell is below one offset value.

13. A network node according to any preceding claim, said network node being further caused to:

   receive an indication as to whether said user equipment has multiple antenna panels, said received signal strength measurements comprising an indication of a panel that said signal strength measurement was measured with; and said network node is caused to apply said offset by applying a first offset where said received measurements indicate a same antenna panel was used for said measurements, and applying a second increased offset where said received signal measurements indicate a different panel was used for said measurements.

14. A network node according to any preceding claim, said network node being caused to determine whether to prioritise synchronised cells over non-synchronised cells by applying said at least one offset in response to one of the following: pre-configuration of said network node, a configuration message received from a central unit, a detected condition determined by said network node.

15. A network node according to any preceding claim, wherein said network node is configured to determine a value of said at least one offset from information in a configuration message received from a central unit.

16. A further network node that supports at least one of central unit control plane, CU-CP, functionality or a layer 3 protocol of a radio access network, comprising:

    at least one processor; and
    at least one memory storing instruction which, when executed by the at least one processor, cause the further network node at least to:
    generate a configuration message for transmission to a network node supporting a distributed unit, said configuration message comprising an indication that synchronised candidate cells, that is cells where timing advance (TA) information is available should be prioritised over non-synchronised cells where no timing advance is available.

17. A further network node according to claim 16, wherein said configuration message indicates said synchronised candidate cells should be prioritised by applying at least one offset in a cell comparison of said synchronised and said non-synchronised cells.

18. A further network node according to claim 16, wherein said configuration message comprises at least one offset, a value of said at least one offset being indicative of an amount by which said synchronised cells should be prioritised over said non-synchronised cells.

19. A further network node according to any one of claim 17 or 18, wherein said configuration message comprises a plurality of offsets, a first offset for synchronised cells where said user equipment does not comprise multiple antenna panels and a second larger offset for at least some synchronised cells where said user equipment does comprise multiple antenna panels.

20. A further network node according to claim 19, wherein said configuration comprises an indication that said larger offset is to be used in for synchronised cells where signal measurements for said synchronised cell and a non synchronised are made with different panels.

21. A communication network comprising a further network node according to any one of claims 1 to 16 and at least one network node according to any one of claims 17 to 20.

22. A method performed at a network node that supports at least one of the distributed unit, DU, functionality or a layer 2 protocol of a radio access network, and which supports a first cell, said method comprising:

    establishing a connection with a user equipment apparatus (UE) via the first cell;
    determining at least one candidate cell with which the UE may connect;
    determining whether said at least one candidate cell is a synchronised cell where timing advance (TA) information for a potential connection between the UE and the candidate cell is available or a non-synchronised cell where no timing advance information is available;
    receiving signal strength measurements for potential candidate cells;
    determining at least one offset to be applied in order to prioritise said synchronised cells over said non-synchronised cells;
    determining whether said UE is to connect to one of said at least one candidate cells based on said received measurements and said at least one offset.

23. A method performed at a further network node that supports at least one of central unit control plane, CU-CP, functionality or a layer 3 protocol of a radio access network, said method comprising:
    generating a configuration message for transmission to a network node supporting a distributed unit, said configuration message comprising an indication that synchronised candidate cells, that is cells where timing advance (TA) information is available should be prioritised over non-synchronised cells where no timing advance is available.

24. A computer program comprising computer readable instructions which when executed by a processor on a network node is operable to control said network node to perform a method according to claim 22 or 23.

FIG. 1

FIG. 2

FIG. 3

FIG. 4a

FIG. 4b

| UE | Source DU/cell | Target DU/cell | CU |
|---|---|---|---|

**Preparation**

1: L3 Measurement Report

2: UL RRC message transfer,
L3 Measurement Report
UE context setup/modification for target cell preparation

3: Generate RRC Reconfiguration
1) Measurement Configuration
of L1 cell change
2) Configuration of prepared target cells
+
DU config for UE to send indication of panel used for target cells
measurement
+
CU to DU config for sync-cell prioritization
Alt #1a and Alt #1b: Offset added to L1 RSRP meas
for sync-cell (same and diff panel)
Alt #2a and Alt #2b A3 Event based offset (same and diff panel)

4: DL RRC message transfer,
RRC message
1) Measurement Configuration
of L1 cell change
2) Configuration of prepared target cells
+
DU config for UE to send indication of panel used for target cells
measurement
+
CU to DU config for sync-cell prioritizations
Alt #1a and Alt #1b: Offset added to L1 RSRP meas
for sync-cell (same and diff panel)
Alt #2a and Alt #2b: A3 Event based offset (same and diff panel)

5: RRC Reconfiguration

6: RRC Reconfiguration Complete

7: UL RRC message transfer

**Execution**

8: Early UL/DL Sync with candidate cells

9: L1 Measurment Report
Indication if same or different panel used for
target cells measurememt
...
L1 Measurment Report
Indication if same or different panel used for
target cells measurememt

10: Both sync and non-sync cells are
stronger than serving cell
Non-sync cell is stronger than sync cell
by less than Offsync dB
Decide to trigger cell change to sync-cell

11: MAC CE trigger cell change

12: UL RRC message transfer

**Completion**

13: UE context release command

14: UE context release complete

http://msc-generator.sourceforge.net v7.2

FIG. 5

FIG. 6

Europäisches
Patentamt

European
Patent Office

Office européen
des brevets

# EUROPEAN SEARCH REPORT

**Application Number**

EP 24 16 1774

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUBRAMANYA CHANDRASHEKAR ET AL: "Performance Enhancements for L1/L2 Triggered Mobility", 3GPP DRAFT; R2-2302778; TYPE DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Online; 20230417 - 20230426 5 April 2023 (2023-04-05), XP052289184, Retrieved from the Internet: URL:https://www.3gpp.org/ftp/TSG_RAN/WG2_RL2/TSGR2_121bis-e/Docs/R2-2302778.zip R2-2302778.docx [retrieved on 2023-04-05] * page 2 * | 1-24 | INV. H04W36/00 ADD. H04W36/08 |
| A | JEDRZEJ STANCZAK ET AL: "On Early TA Acquisition in LTM", 3GPP DRAFT; R2-2300473; TYPE DISCUSSION; NR_MOB_ENH2-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Athens, GR; 20230227 - 20230303 17 February 2023 (2023-02-17), XP052245119, Retrieved from the Internet: URL:https://www.3gpp.org/ftp/TSG_RAN/WG2_RL2/TSGR2_121/Docs/R2-2300473.zip R2-2300473 On Early TA Acquisition in LTM.docx [retrieved on 2023-02-17] * pages 3-5 * | 1-24 | TECHNICAL FIELDS SEARCHED (IPC) H04W |

The present search report has been drawn up for all claims

| Place of search | Date of completion of the search | Examiner |
|---|---|---|
| Munich | 23 August 2024 | Rüschmann, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)